# EUROPEAN PATENT APPLICATION

(11) **EP 1 672 839 A2**
(43) Date of publication of application: **21.06.2006**
(21) Application number: 05026766.5
(22) Date of filing: 07.12.2005
(51) Int. Cl.: H04L 12/28

(54) **Channel selecting method using remote scanning and wireless local area network system thereof**

(30) Priority: 14.12.2004 KR 2004105752
(71) Applicant: LG Electronics Inc., Yongdungpo-gu Seoul (KR)
(72) Inventor: Cho, Hyeon Cheol, 603-2201, Hanyang Apt., Seongnam-si, Gyeonggi-do 463-922 (KR); Hahn, Dong Woon, Seoul 140-744 (KR); Kwak, Dong Hoon, 408-1502, Lotte Seongyeong Apt., Seongnam-si, Gyeonggi-do 463-738 (KR); Hwang, Min Ho, Seocho-gu, Seoul 137-140 (KR)
(74) Representative: Katérle, Axel

(57) **Abstract**

A channel selecting method for a Wireless Local Area Network (WLAN) using remote scanning and a WLAN system thereof is disclosed in which a wireless environment is comprehensively discriminated to select an optimum channel by information. The information is obtained from stations of each node (STA) in a wireless network and is not local information near the Access Point. Channel selection is configured to be automatically implemented during an initial configuration of the WLAN and during operation. The method includes the AP requesting remote scanning for each node (STA) comprising the WLAN. Each node transmits a remote scanning result to the AP. An optimum channel is discriminated and a determination is made as to whether transfer has been made to the channel based on the information received from each node. The AP, transferring to the optimum channel, thus discriminated to form a new WLAN if channel transfer is implemented according to the discrimination.

## Description

This application claims the benefit of Korean Patent Application No. 2004-0105752, filed on December 14, 2004, which is hereby incorporated by reference for all purposes as if fully set forth herein.

### BACKGROUND OF THE INVENTION

### Field of the Invention

The present invention relates to a channel selecting method of a Wireless Local Area Network (WLAN) using remote scanning and a WLAN system thereof, whereby a wireless environment is comprehensively discriminated by information obtained from each station of a wireless network to enable and select an optimum channel during an initial configuration of the WLAN and even during operation.

### Discussion of the Related Art

With the development of wireless communication and network technologies, wireless Audio/Video (hereinafter referred to as A/V) equipment, capable of wireless transmission of multimedia contents such as image and music, are becoming more prevalent. The increasing trend of going wireless on various digital media system is anticipated to continue to increase. Along with this ongoing tendency, obstacles associated with the wireless environment are also expected to increase.

Various communication and non-communication equipment (such as, for example, hot spot service providing apparatuses, personal computers equipped with WLAN, cordless phones and microwave ovens) pollute the channel environment, where the wireless A/V equipment operates. Moreover, when the equipment is invariably turned on and off, it becomes difficult to anticipate its operating duration.

Generally, the wireless communication environment is plagued by various interferences unlike the wired communication environment, such that communication quality provided by each channel fluctuates invariably.

For instance, interference may be caused by communication traffic loads fluctuantly created by other wireless communication units operating on frequency bands that are adjacent to or separated by only a few channel bandwidths (a problem known as "adjacent channel interference"). Other causes of interference include electromagnetic waves irradiated to frequency bandwidths used by the wireless networks, which are used for purposes other than communication. For example, microwaves emitted from microwave ovens and the like may cause interference.

Under the circumstances thus explained, if a station participating in a network is a WLAN-based mobile unit, communication may vary in quality due to its mobility. As a result, Access Point (AP) equipment and a WLAN system including a station should consider surrounding channel situations when wireless channels are selected, and select a wireless channel capable of providing the best communication quality. Hereinafter, the terminology "AP" includes but is not limited to an access point, a base station, Node-B, site controller, or any other type of interfacing device in a wireless environment.

Consequently, it is necessary for the wireless A/V equipment to adapt to the wireless environment in order to satisfy the requirement of Quality of Service (QoS) for transmitting multi-media contents.

If a system is a WLAN based on Physical Layer (PHY) standards of IEEE 802.11a, IEEE 802.11b or IEEE 802.11g, only a single channel is selected out of various usable channels. Conventionally, the wireless channel has been manually established by AP or selected based on a result of the AP initially starting the operation and spatially monitoring the ambient wireless environment.

However, there is a problem in the manual channel establishment in that it cannot adapt to the changing wireless environment. Likewise, there is another problem in the method of the AP monitoring the channel environment and establishing a channel in that a channel environment about a station is not considered.

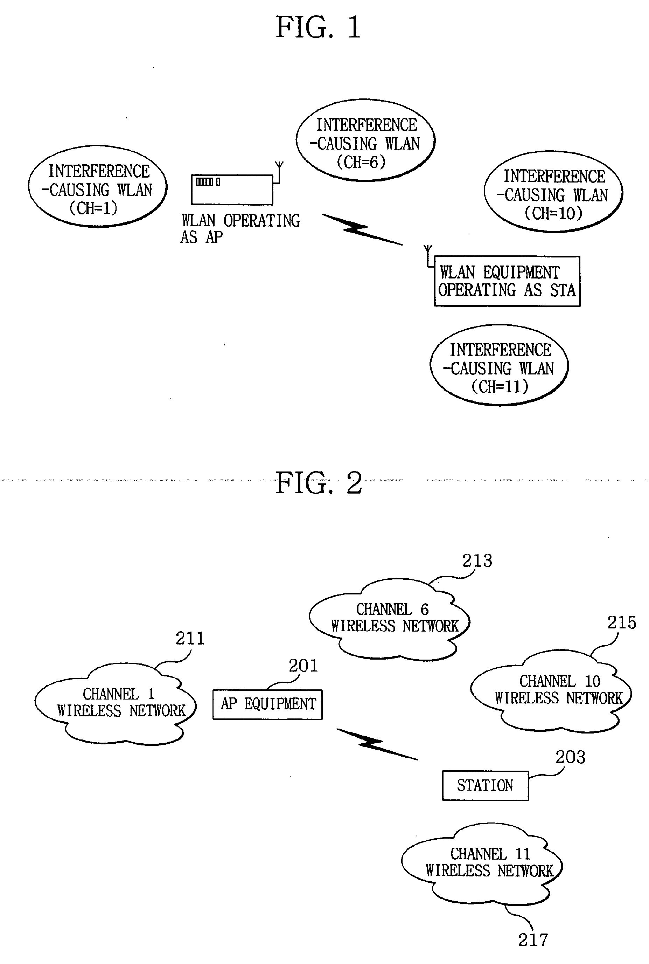

FIG.1 is a schematic representation illustrating a configuration of a WLAN according to the prior art, which shows a case where a station is situated at a far-away location such that the AP cannot spatially monitor the wireless environment proximate to the station.

A channel may be selected to be 11 (CH=11) during an initial WLAN set-up if the AP cannot detect interference-causing wireless equipment or discriminates it as a channel having very little power. In this case, wireless equipment operating at channel 10 or channel 11 is actually available about the station to cause a LAN communication at the relevant channel a severe operational problem.

Also, the AP cannot implement the scanning of channels during operation according to the WLAN standards. As a result, it is difficult for the AP to be able to implement an effective wireless environment and the monitoring of channels during operation. That is, when a wireless environment of a current channel is worsened, it becomes difficult to transfer to an optimum channel.

### SUMMARY OF THE INVENTION

To solve the aforementioned problems, it is an object of the present invention to provide a channel selecting method for a WLAN using remote scanning and a WLAN system thereof, whereby channel selection is configured to be automatically implemented via remote scanning during configuration of the WLAN and even during operation.

Another object is to use information, obtained via scanning of stations of each node of the wireless network, that is not a local one adjacent to the AP, and to comprehensively discriminate the wireless environment, thereby enabling the selection of an optimum channel.

The channel selecting method of a WLAN using remote scanning according to the object of the present invention comprises: AP equipment requesting remote scanning for each station connected to its WLAN; the AP equipment selecting a relatively interference-less channel as a channel to transfer to, based on a scanning result contained in a response of each station according to the request relative to operable channel set; the AP equipment forming a new WLAN at the selected channel if the channel to transfer to has been selected.

Preferably, the method further comprises: the AP equipment setting up an operation mode as a station mode during an initial startup; the AP equipment of the station mode selecting a channel to transfer to based on the channel-scanned information; and the AP equipment returning to AP mode following channel selection at the station mode and forming a new WLAN at the channel selected on the station mode.

The method may further comprise the AP equipment forming a WLAN on the pre-set channel during the initial startup if the AP equipment is set to manually select a channel during the initial startup.

Preferably, the request and the response are embodied by Media Access Control (MAC) protocol. Otherwise, the request and the response may be embodied by transmitting an IP (Internet Protocol) packet with respect to TCP/IP (Transmission Control Protocol/IP) or UDP/IP (User Datagram Protocol/IP). Also, IP allocation and network layer connection are simultaneously realized when the station is initially connected to the AP equipment.

The scanning result includes information on each channel belonging to the channel set, and the information on each channel includes at least either a kind or a reception power of wireless network or a reception power detected by relevant channel.

Information on the channel, which the AP equipment and the station are currently operating, is a reception power from the AP equipment.

The scanning result may further include at least one of a group of Clear Channel Assessment (CCA) ratio, radar detection or non-detection, noise power and Packet Error Ratio (PER) relative to an entire time window measurement.

When selecting a channel to transfer to, the currently operating channel may be optimum as a result of discrimination by the AP based on response of each station. If this is the case, the AP equipment maintains the current channel instead of selecting and transferring to another channel.

Forming a new WLAN comprises the AP equipment and the station using channel selection and advertising methods designated by the Dynamic Frequency Selection (DFS) to form a new WLAN at the selected channel, if the AP equipment supports a Dynamic Frequency Selection (DFS) Function of IEEE 802.11h and the selected channel is in the range of 5 GHz band. The AP equipment forms a new WLAN at the selected channel by releasing the WLAN in which the AP is operating and associating with each station, in at least one of the following two cases where the selected channel is not in the range of 5GHz band and the AP equipment does not support the DFS function.

The association with the new WLAN of each station is realized by the station scanning each channel and searching the new WLAN if the beacon is not received via the operating channel.

A WLAN system according to another embodiment of the present invention comprises at least a singular station or AP equipment.

The station transmits a response including a scanned result of each channel of an operable channel set in response to a predetermined scanning request.

The AP equipment implements the scanning request to the station and forms a new WLAN at the selected channel if a channel to transfer to is selected based on the scanned result included in the response.

### BRIEF DESCRIPTION OF THE DRAWINGS

A more detailed understanding of the invention may be obtained from the following description, given by way of example and to be understood in conjunction with the accompanying drawings, wherein:
FIG.1 is a schematic representation illustrating a configuration method of a WLAN according to the prior art;
FIG.2 is a schematic representation illustrating a WLAN system in which channel selection is possible by remote scanning according to the present invention;
FIG.3 is a flow diagram illustrating a process of configuring an initial WLAN at AP according to the present invention;
FIG.4 is a flow diagram illustrating a process of determining whether a channel has been transferred if stations participate in the WLAN according to the present invention; and
FIG.5 is a flow diagram illustrating a channel transfer process of WLAN according to the present invention.

### DETAILED DESCRIPTION OF THE ILLUSTRATED EMBODIMENTS

Preferred embodiments of the present invention will now be described in detail with reference to the accompanying drawings.

Referring to FIG.2, a WLAN system in which channel selection is possible by remote scanning according to the present invention will be described.

The WLAN system according to the present invention forms a WLAN including AP equipment (201) and at least one station (203).

The WLAN system according to the present invention operating in one singular channel may be interfered by networks operating in the same channel or neighboring channel and interference equipment. For example, FIG.2 illustrates existence of a wireless network at channels 1, 6, 10 and 11 which can cause interference to communication of a WLAN system according to the present invention.

In the WLAN system according to the present invention, the AP equipment obtains information on the channel situation from a remote station (203) to enable and grasp neighboring interference conditions, and a new WLAN is configured to be formed by selecting an optimum channel based thereon.

The AP equipment (201) functions as a master and forms a WLAN on a singular channel along with neighboring mobile station (203).

The initial startup of the AP equipment (201) corresponds to a case where there is no station (203) nearby, and channels may be manually or automatically selected to form a WLAN. If the channel is automatically selected, the AP equipment operates under a station mode by itself and selects the channel to form a WLAN. If the channel is manually selected, the AP equipment (201) forms a WLAN on a pre-set channel.

Furthermore, the AP equipment (201) receives channel information from the station (203) to enable and change the operable channel if the station (203) is nearby. The change is further effective if situation of the operating WLAN is not satisfactory due to interference of neighboring channels or situation changes of the channel about the far-away station (203). Consequently, the AP equipment (201) is configured to always create a new WLAN at the relevant channel by selecting an optimum channel.

The AP equipment (201) therefore requests the far-away station (203) to scan relative to a channel within a channel set and receives a scanning result thereof. The AP equipment (201) determines to transfer and not-transfer the channel based on the received scanning result, and selects an optimum channel. Successively, the AP equipment (201) transfers to the relevant channel to form a new WLAN. The channel set is a set of channels in which the WLAN according to the present invention can operate, and may vary according to the standards and regions of the WLAN.

If the AP equipment (201) and the station (203) support a DFS of IEEE 802.11h standard of 5 GHz, the channel transfer is configured to be implemented by using channel selection and a method designated by the DFS.

The station (203) operates as a slave relative to the AP equipment (201) and forms a WLAN.

The station (203) is configured to transfer to the AP equipment (201) the scanning result of each channel within the channel set in response to a request by the AP equipment (201). Furthermore, if communication is not realized due to the fact the AP equipment (201) releases the WLAN on the existing channel to move the channel, the station (203) scans the channel by itself to search the AP equipment (201) and is configured to associate with the newly formed WLAN.

For reference, preferably, the request and response between the AP equipment (201), which is a base station in the present invention, and the station (203) is created by Media Access Control (MAC) protocol. However, if there is no support from MAC of the terminal, the request and response may be embodied by transmitting IP packet according to Transmission Control Protocol/Internet Protocol (TCP/IP) or User Datagram Protocol/Internet Protocol (UDP/IP). In this case, it is assumed that the IP allocation and network layer are simultaneously connected when the station (203) is connected to the AP equipment (201).

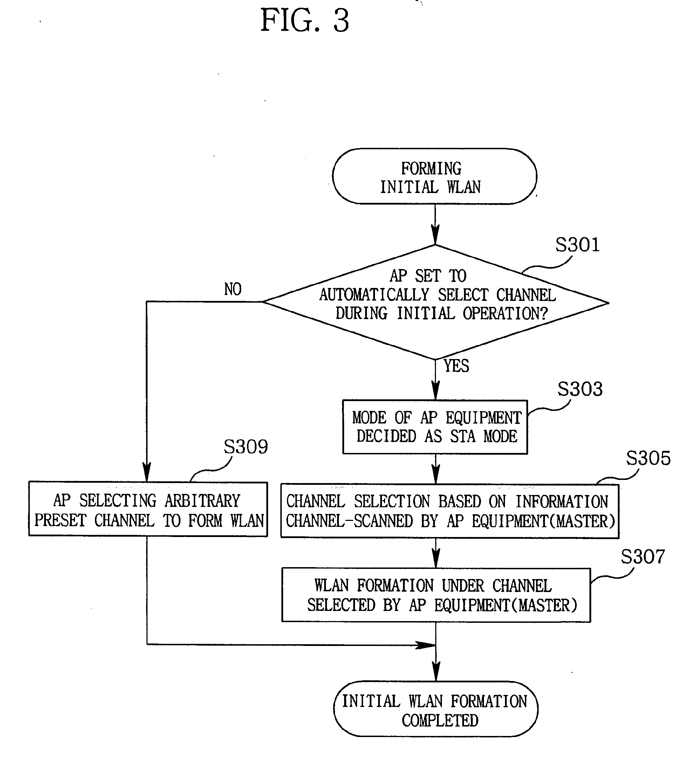

Hereinafter, a channel selecting method of WLAN using remote scanning will be described with reference to FIGS.3 through 5. FIGS. 3 through 5 are described based on the WLAN system of FIG.2. However, for explanation convenience, it is presumed that the WLAN environment according to this non-limiting example includes only one station (203).

In order to describe a proper operation of the present invention, FIGS. 3 through 5 are methodically or procedurally illustrated. First of all, description is made on a process where the AP equipment is initially started and selects an optimum channel to form a WLAN.

Because the AP equipment (201) commences an initial operation, the station existing in a space is not yet connected to the AP equipment (201). Discrimination is made on whether the AP equipment (201) is set up to automatically select a channel during the initial operation (S301). If the AP equipment (201) is set up to automatically select the channel as a result of the discrimination, the AP equipment (201) sets up the operation mode to a station mode (S303).

The AP equipment (201) scans the channel within the channel set actively or passively to select a channel for forming a WLAN based on the scanned information (S305) and forms the WLAN on the selected channel (S307).

If the selection method of AP equipment (201) is not automatically set up as a result of the discrimination, the WLAN is formed on the pre-set channel (S309), and formation of initial WLAN network based on the AP equipment (201) is completed.

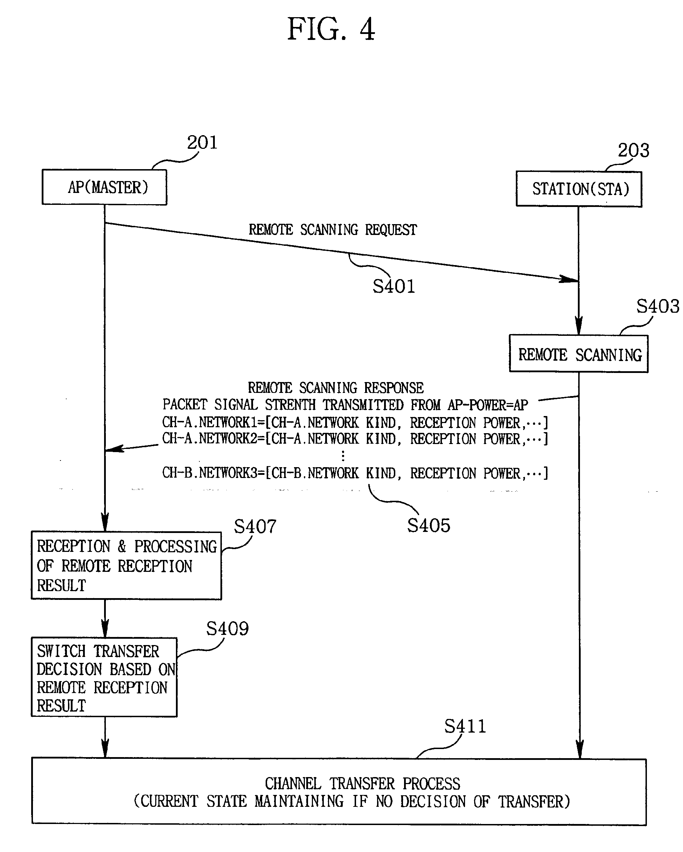

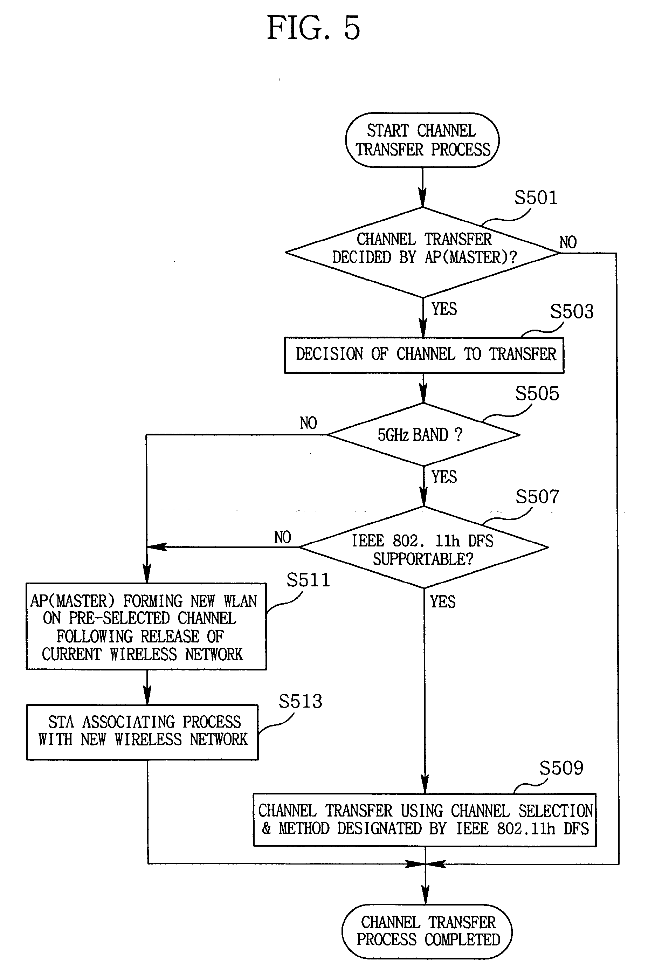

Now, the process in which the AP equipment (201) determines whether a channel has been transferred will be described with reference to FIG.4. A channel transfer process will be described with reference to FIG.5.

Referring to FIG.4, determining whether an operating channel has been transferred by stations (203) associating with the WLAN according to the present invention will be explained.

The AP equipment (201) requests each station (203) on the network to scan. However, the scanning request may be implemented according to preferred embodiments if communication conditions with each station (203) are not satisfactory (S401).

Each station (203) actively or passively scans each channel of the channel set in response to the scanning request of the AP equipment (201) (S403). Each station (203) transmits the response including the scanned result to the AP equipment (201). As mentioned earlier, preferably, the request and response are embodied by MAC protocol. However, if they are not supported by the MAC terminal, they can embodied by transmission of IP packets according to the TCP/IP or UDP/IP protocol (S405).

The AP equipment (201) receives and processes the scanned result from each station (203) (S407) and determines whether to transfer or not transfer based on the scanned result. The AP equipment (201) selects a channel having the most satisfactory channel situation depending on absence of WLAN operating in the relevant channel and less interference by neighboring channels, based on the scanned result received from the stations (203) (S409).

Once determination is made to transfer the channel, the AP equipment (201) selects the optimum channel and transfers the channel based on the remote scanning result. Conversely, the AP equipment (201) maintains the current channel if determination is made not to transfer the channel (S411).

Hereinafter, description is made in detail of the response transmitted to the AP equipment (201) by each station (203) at step S405. Response included with the scanned result contains information on each channel of the channel set. The information on the channel, i.e., the information on each channel belonging to the channel set includes the kind of each detected wireless network and reception power thereof, except that information on a channel where a current WLAN system is operating corresponds to a signal reception power from the AP equipment (201).

The signal reception power from the AP equipment (201) may be transmitted by using RSSI (Received Signal Strength Indication) or RCPI (Received Channel Power Indicator). If the RSSI (general 802.11 WLAN) and the RCPI (802.11k supporting WLAN) are all supported, the RCPI is used. The RCPI is a parameter regulated by IEEE 802.11k which is the standard for stipulating a new standard on Radio Resource Measurement.

The reception power of WLAN detected out of information on each channel may use RSSI or RCPI. This kind of WLAN denotes IEEE 802.11a, IEEE 802.11b and IEEE 802.11g and the like.

If the WLAN detected from the scanned channel is compatible with legacy standards with IEEE 802.11b/IEEE 802.11 such as IEEE 802.11g, and relevant network is associated with even single equipment conforming to the legacy standard, the relevant WLAN is considered as a legacy network.

For example, even if AP equipment of the relevant WLAN supports IEEE 802.11g, and if equipment supporting only 802.11b is available in the associated equipment, the entire network is considered as IEEE 802.11b. This can be discriminated by time slot size and the like.

Information on a single channel out of the channel set is configured to be as many as the number of stations connecting to the WLAN. Consequently, the AP equipment (201) selects a channel with relatively less possible interference based on the information. Furthermore, the following information is also configured to be included:
1. CCA (Clear Channel Assessment) ratio: a time slot ratio where CCA is based on the entire time slot measurement;
2. Whether there is radar detection: it may be required according to regulations, such as the 5 GHz band;
3. Whether there is detection of radio signals, such as other noises and power; and
4. Packet Error Ratio of the entire time window measurement.

Furthermore, other monitorable information are configured to be transmitted if necessary.

As described above via the method in FIG.4, the AP equipment (201) determines whether to transmit or not transmit if the stations (203) are associated with the WLAN.

If channel transmission is determined, the AP equipment (201) selects an optimum channel based on the remote scanning result and transmits the channel. Conversely, if the AP equipment determines not to transfer the channel, the current channel is maintained by skipping a channel transmission process as explained by the following.

Hereinafter, a channel transfer and transmission process of the WLAN will be described with reference to FIG. 5.

If channel transfer and transmission are decided (S501), the AP equipment (201) determines the selected channel (S503). The channel selection thus mentioned may be implemented simultaneously with or before the decision of channel transfer and transmission.

The AP equipment (201) discriminates whether the selected channel is in the 5 GHz band or the 2.4 GHz band.

If the selected channel is in the 5 GHz band, the AP equipment (201) discriminates whether the DFS function of IEEE 802.11h is supported (S507), and if positive or confirmed, the channel is transferred using the channel selection method designated by the DFS and advertisement method.

However, in case the DFS function is not supported, even if the set-up channel is 2.4 GHz band as a discrimination result at S505, or the channel to be transferred is 5 GHz band as a discrimination result at S507, the AP equipment (201) implements the conventional channel transfer method. In other words, the AP equipment (201) releases the current WLAN and forms a new wireless network on the selected channel (S511).

As a result, each station (203) scans each channel to seek a new channel to be transferred by the AP equipment as a beacon is not received. Then, the stations (203) come to be associated with a new WLAN.

As apparent from the foregoing, the WLAN system according to the present invention is configured to select a channel in consideration of the channel environment near the AP equipment and that of various stations, as well. As a result, it is possible to select a least-interfered optimum channel in communication with each station and to assure QoS of WLAN.

Furthermore, information provided by each station scanning channel environment during operation is configured to be utilized to enable the AP equipment to cope with limitations of channels not scannable during operation. This enables an implementation of comprehensive discrimination of the wireless channel environment and a decision corresponding to an effective channel transfer.

The present invention has been described above in varied detail by referring to particular embodiments and figures. However, these specifics should not be considered to limit the scope of the invention, but merely serve as illustrations of some of the presently preferred or exemplary embodiments. It is to be further understood that other modifications or substitutions may be made by those skilled in the art without departing from the broad scope of the invention. The modifications or substitutions should not be construed to be outside the scope of the technical ideas or aspects of the present invention.

## Claims

1. A channel selecting method for a Wireless Local Area Network (WLAN) using remote scanning, said method comprising:
requesting, via Access Point (AP) equipment, remote scanning for each station connected to the WLAN;
selecting, via the AP equipment, a channel, which is optimum with respect to at least interference, from a plurality of channels as a transfer channel based on a scanning result included in a response of each station;
forming, via the AP equipment, a new WLAN at the selected channel if the transfer channel has been selected.

2. The method as defined in claim 1, further comprising:
setting up, via the AP equipment, an operation mode to be a station mode during startup;
selecting, via the AP equipment during station mode, the transfer channel based on channel-scanned information; and
switching, via the AP equipment, to AP mode after said selecting and said forming of the new WLAN at the selected channel during the station mode.

3. The method as defined in claim 1, further comprising forming, via the AP equipment, a WLAN based on a pre-set channel during startup if the AP equipment is set to manually select a channel during the startup.

4. The method as defined in claim 1, wherein the request and the response are implemented according to Media Access Control (MAC) protocol.

5. The method as defined in claim 1, further comprising simultaneously implementing IP allocation and network layer connections when each station is initially connected to the AP equipment, and the request and the response are implemented according to an Internet Protocol (IP) with respect to TCP/IP (Transmission Control Protocol/IP) or UDP/IP (User Datagram Protocol/IP).

6. The method as defined in claim 1, wherein the scanning result comprises information on each channel of a channel set, the information on each channel comprises at least a kind or a reception power of wireless network detected by a relevant channel.

7. The method as defined in claim 6, wherein the information on a channel on which the AP equipment and the station are currently operating includes a reception power from the AP equipment.

8. The method as defined in claim 1, wherein the scanning result further comprises at least one of Clear Channel Assessment (CCA) ratio, radar detection or non-detection, noise power and Packet Error Ratio (PER) relative to an entire time window measurement.

9. The method as defined in claim 1, wherein said selecting the transfer channel comprises the AP equipment maintaining a currently operating channel if the currently operating channel is discriminated to be the optimum channel based on the response of each station.

10. The method as defined in claim 1, wherein said forming the new WLAN comprises using, via the AP equipment and each station, channel selection and advertising methods designated by a Dynamic Frequency Selection (DFS) to form the new WLAN at the selected channel, if the AP equipment supports the DFS Function of IEEE 802.11h and the selected channel is in a range of a 5 GHz band.

11. The method as defined in claim 1, wherein said forming the new WLAN comprises forming, via the AP equipment, the new WLAN at the selected channel by releasing a WLAN currently associated with the AP equipment and each station based upon at least one of the selected channel not being in a range of a 5GHz band and the AP equipment not supporting the DFS function.

12. The method as defined in claim 11, further comprising associating with the new WLAN of each station comprises the station scanning each channel and searching the new WLAN for association if beacon is not received via an operating channel.

13. A system for a Wireless Local Area Network (WLAN) comprising:
at least one station transmitting a response including a scanning result of each channel of a channel set of operable channels according to a scanning request; and
Access Point (AP) equipment forming a new WLAN based on a selected channel if the AP equipment requests scanning of the station and selects the transfer channel based on the scanning result.

14. The system as defined in claim 13, wherein the AP equipment sets up an operation mode to be a station mode during startup for automatic channel selection and selects a transfer channel based on channel scanned information, and switches to AP mode after channel selection while in the station mode to form the new WLAN at the selected channel during the station mode.

15. The system as defined in claim 13, wherein the scanning result comprises information on each channel belonging to of the channel set, the information on each channel comprises at least a kind or a reception power of wireless network detected by a relevant channel.

16. The system as defined in claim 15, wherein the information on the channel on which the station is currently operating includes a reception power from the AP equipment.

17. The system as defined in claim 15, wherein the scanning result further comprises at least one of Clear Channel Assessment (CCA) ratio, radar detection or non-detection, noise power and Packet Error Ratio (PER) relative to an entire time window measurement.

18. The system as defined in claim 13, wherein the AP equipment does not select the transfer channel if it is discriminated that a currently operating channel is optimum based on the response of the at least one station.

19. The system as defined 13, wherein the AP equipment uses channel selection and advertising methods designated by Dynamic Frequency Selection to form the new WLAN at the selected channel if it is discriminated that the selected channel is in a range of 5GHz and the AP equipment supports the DFS function of IEEE 802.11h.

20. The system as defined in claim 13, wherein the AP equipment releases an operating WLAN to form a new WLAN at the selected channel based upon at least one of the selected channel not being in range of a 5GHz band and the AP equipment not supporting the DFS function of IEEE 802.11h; wherein the at least one station scans each channel and searches the new WLAN for association if a beacon is not received via an operating channel.
